# EUROPEAN PATENT SPECIFICATION

(11) **EP 0 595 366 B1**
(45) Date of publication and mention of the grant of the patent: **14.08.1996**
(21) Application number: 93118636.5
(22) Date of filing: 22.01.1989
(51) Int. Cl.: G01D 5/20

(54) **Linear displacement transducer particularly useful for hydraulic and pneumatic cylinders**
Linearer Weggeber, besonders verwendbar bei hydraulischen und pneumatischen Zylindern
Capteur de déplacement linéaire, particulièrement utile dans les cylindres hydrauliques et pneumatiques

(30) Priority: 22.01.1988 US 147142; 22.01.1988 US 146824; 22.01.1988 US 147241; 07.03.1988 US 165138; 07.03.1988 US 164979; 22.01.1988 US 146823
(43) Date of publication of application: 04.05.1994
(62) Divisional of application: 89710006.1
(73) Proprietor: DATA INSTRUMENTS INC., Acton, MA 01720 (US)
(72) Inventor: Redlich, Robert W., Athens, Ohio 45 701 (US); Scheck, Christopher G., Athens, Ohio 45 701 (US)
(74) Representative: Matschkur, Götz, Lindner Patent- und Rechtsanwälte

(56) References cited:
- WO-A-87/00951
- GB-A- 2 021 770
- US-A- 3 654 549
- US-A- 4 667 158

## Description

This invention relates to an apparatus for measuring the relative displacement of a piston/piston rod unit sealingly slidable within the cylinder of a pressurized cylinder actuator with end caps for sealing the ends of the cylinder, and with an elongated, current conducting coil, which is mounted to an end cap and extends into a hole in and parallel to the axis of the piston/piston rod unit.

The UK Patent Application GB 2 021 770 A discloses a transducer for measuring displacements between a piston and cylinder of a hydraulic ram. According to this document a piston has a blind bore, which extends into the piston rod and is nearly as deep as the length of the cylinder. A bar is concentrically arranged within the cylinder and is secured to that cylinder end wall, which is facing the opening of the blind bore within the piston. This bar carries lengthwise thereof two separate windings, which are laid into longitudinal slottings thereof. A primary one of these two windings is coupled to an oscillator, which operates at a frequency of 2 kHz. This primary winding is magnetically coupled to the secondary winding, and the influenced signal of this secondary winding is rectified within a detection circuitry and amplified to develop an output signal with an amplitude, which is dependant on the rate of the magnetic coupling between the two windings. This coupling is effected by the piston rod, which surrounds the bar with the two windings, and which is made of magnetic material. If the piston rod is completely moved into the cylinder, both windings are entirely surrounded by magnetic material and therefore the magnetic coupling between the two windings reaches a maximum. On the other hand, if the piston rod is moved outside of the cylinder, the magnetic coupling between the two windings is effected only through the hydraulic oil of the cylinder and is therefore rather low.

This arrangement uses two coils, which are laid into longitudinal slots of an elongated member, and therefore the manufacturing of such a transducer is rather complicated, which leads to a very expensive arrangement.

For this reason the US 3,654,549 (Maurer et al.) shows a somewhat better construction of an apparatus for inductively monitoring the movement of a piston within a cylinder, for example of an injection molding machine. Especially the arrangement of the embodiment of Fig. 2 of this former document is rather similar to that of the GB 2 021 770 with the difference, that the two windings are coaxially wound arround an elongated core, which is fixed to one end plate of the cylinder and extends into a longitudinal cavity of the piston/piston rod unit. Further, these two windings are axially displaced, so that there is no magnetic coupling between these two windings. The measuring winding surrounds the elongated member at that part thereof, which extends into the cylinder cavity, while the second or compensating coil is arranged outside of this cavity. The measuring coil and the compensating coil form a pair of adjoining branches of an alternating current bridge circuit, the other two branches of which are formed by resistors. This bridge circuit is excited by an alternating current source, and a voltage measuring instrument is coupled with diagonal terminals of this current bridge. The voltage measured with this instrument is dependant on the inductivity of the measuring coil. The inductivity of this coil varies with the displacement of the piston, as the piston rod, which partially surrounds the measuring coil, is made from ferromagnetic material.

Such a construction is in most cases rather inefficient, as most cylinder actuators have casings made of iron, which is able to provide a low reluctance flux path for the magnetic field of the measuring coil. So there is no evident variation in the inductande of the coil, even if the piston is moved from one end of the cylinder to the other.

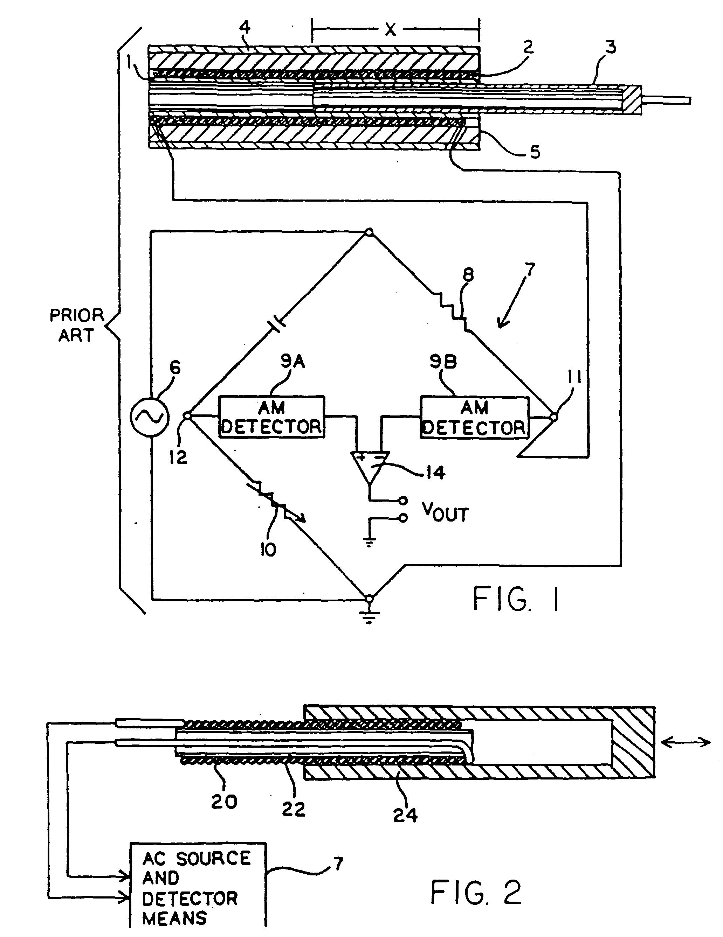

Therefore I developped another linear displacement transducer arrangement, which is shown in my previous U.S. Patent 4,667,158 and is illustrated in Fig. 1. The transducer is a helical coil 2 of an electrical conductor wound at a uniform pitch on a cylindrical, thinwalled tube or bobbin 1 of an electrical insulator or a poor conductor such as stainless steel. Preferably, the tube has suitable properties for use as a dry bearing surface, for example Teflon. The helical coil 2 is fixed to the first of two relatively movable bodies for which the relative displacement is to be measured.

A nonferromagnetic, electrically conducting rod or preferably a tube forms a core 3 which is slidable within the bobbin 1. It is made, for example, of aluminium or copper and is fixed to the second of the two relatively moving bodies.

Preferably the coil is surrounded by a low and constant reluctance path so that changes in coil inductance with respect to core 3 movement is maximized. This is preferably accomplished by positioning a material, such as ferrite 5, having a high magnetic permeability, but low electrical conductivity surrounding the coil. This material provides the desired low magnetic reluctance while not permitting the formation of significant eddy currents and not exhibiting a substantial skin effect.

Preferably this high permeability, low conductivity material is itself surrounded with a tubular shield 4 of high electrical conductivity to confine the field of the coil to the ferrite 5 and the skin effect layer of the shield 4 and to prevent external fields from linking with the coil 2. The shield 4 confines the magnetic flux generated by the current in the coil 2 and shields it from stray fields over a wide frequency range. It is preferably made of a material having both high electrical conductivity and high magnetic permeability, such as soft iron or low carbon steel.

An AC electrical energy source 6 and a detector circuit means 7, preferably in the form of a bridge circuit, are electrically connected to the coil 2. The AC source 6 operates at a frequency, preferably in the range of 50-200Khz, which may be designated a carrier frequency f_{c}. An important key to the efficient and effective operation of a transducer of this type is that the frequency of the source 6 be high enough that the skin depth in the core 3 is substantially less than the radius of the core and less than the thickness of the wall of the tube.

The source 6 drives the coil through a resistor 8 which has a resistance which is much greater than the inductive reactance of the coil and its associated structures so that effectively the transducer is driven by a current source. Therefore, the voltage across the transducer coil 5 is approximately (V/R)*(2 pi f_{c} L).

The detector circuit 7 detects a signal at an AM detector 9 which is proportional to the inductance of the coil 2 and its associated structures. The coil voltage is proportional to coil inductance, which in turn is proportional to the displacement of the core 3.

In the operation of the basic concept of the displacement measurement apparatus of Fig. 1, the AC source 6 excites the bridge circuit, including the transducer coil 2 in one of its branches. Because of the skin effect at the frequency at which the AC source 6 is operating, magnetic fields in the core 3 are confined to a thin layer approximately equal to the sum of the skin depth in the core material which is typically on the order of 0.25 millimeters thick plus the spacing from the exterior of the core 3 to the interior of the coil 2. Because the skin depth is considerably less than the radius of the core, the magnetic flux is confined to a path in the region of the core 3 which has a considerably smaller cross-sectional area than the flux path where there is no core 3. Since reluctance is inversely proportional to the cross-sectional area of the flux path, the core 3 has the effect of substantially increasing the reluctance and therefore substantially reducing the magnetic flux in the region of the core. With the core 3 partially inserted in the coil 2 of the transducer, the interior of the coil 2 can be divided into the region occupied by the core 3 where magnetic flux is low, and the region unoccupied by the core where magnetic flux is relatively high compared to the core region.
Therefore, the flux linkages of the coil are substantially reduced as a result of the insertion of the core and are reduced in proportion of the extent of the insertion of the core within the coil 2. This, in turn, proportionally reduces the self inductance of the coil 2. Thus, the movable core varies the self inductance and the impedance and therefore varies the voltage across the transducer in proportion to its displacement.

While a great variety of detector circuits are known to those skilled in the art for detecting a signal which is proportional to the changes in coil inductance or voltage, the detector circuit of Fig. 1 operates well. A bridge is designed to be brought into AC amplitude balance by adjustable resistor 10 when the core 3 is centered within the coil 2. The AC source 6 is a signal at a frequency f_{c}. The amplitude of the transducer signal at frequency f_{c} at the node 11 of the bridge proportional to the displacement of the core 3. The amplitude of the balance signal at frequency f_{c} at the opposite node 12 is adjusted so that it is equal to the amplitude of the transducer signal at node 11 when the core 3 is centered within the coil 2. A detector circuit means comprising two AM detectors 9A and 9B and a differential amplifier 14 are provided to detect the difference between the modulation amplitudes at the nodes 11 and 12.

The displacement of the core 3 is effectively providing an amplitude modulated signal at the terminal 11, the amplitude of which is proportional to displacement of the core 3 and may be detected by the AM detector 9B to provide an output signal which is directly proportional to the displacement of the core 3. The balance signal at node 12 is detected by an AM detector circuit 9A. The output signals from the two AM detectors 9A and 9B are applied to a differential amplifier 14, the output of which provides a signal Vₒᵤₜ which is proportional to the displacement of the core 3. Further details of the basic concept are described in more detail in my above cited U.S. Patent.

Embodiments of the invention, as described, can be applied or attached to relatively moving parts of substantially any machine. It is desirable to utilize such a device for detecting the displacement of a pneumatic or hydraulic cylinder such as used in control systems. Embodiments, as described above, can, of course, be attached externally in a variety of ways to such cylinders. However, exterior mounting would provide an additional, protruding structure on the cylinder which is unsightly, subject to damage, and would necessitate that additional space be allocated for it.

Therefore, the transducer is desirably positioned within the cylinder of the hydraulic or pneumatic actuator. In order for the transducer to be mounted in the actuator in a manner which does not interfere with the movement of the piston and its attached piston rod throughout its range of reciprocation within the cylinder, it is necessary that a hole be drilled into the piston/piston rod unit so that the transducer can be mounted on one end cap of the cylinder and can extend into the hole within the piston/piston rod. The transducer would extend completely into the bore in the piston when the piston is adjacent the end cap to which the transducer is connected.

The difficulty with using a transducer like the one illustrated in my above patent is that it would require a bore which is larger in diameter than manufacturers are willing to form in the piston/piston rod unit. Typically a maximum of 12 millimeters is permitted. Also, it would require that the slidable core be attached at the bottom of the bore to the piston/piston rod unit. Although the coil of the above embodiments of the invention are typically 6 to 10 millimeters in diameter, the addition of the externally surroundings ferrite and shield greatly increases the diameter of the transducer to typically on the order of 20 millimeters.

Another inductance system, which is known from the WO 87/00951, is used for measuring a pressure or force, which is converted for this purpose into a small displacement of about 1 to 5 mm of a diaphragm, which is fixed to one part of the inductance system. The different purpose of this known inductance system requires entirely different properties of the measuring arrangement and leads to a quite different transducer, which cannot be built into an hydraulic cylinder, where the piston moves within a range of about 300 mm. This results especially from the fact, that this former inductance system shall not be operated at a predetermined oszillator frequency. The coil of this transducer, which is wound around a magnetic core, is connected into a bistable switching circuit, whose switching frequency is dependant on the inductivity of the coil. The inductivity of this coil can be influenced according to one embodiment of this former document by a hollow cylinder, which is fixed to the diaphragm and fits slidably over the coil. This hollow cylinder is made of a non-ferrous metallic material, so that its relative position will variably alter the magnetic field around the coil, allowing for an eddy current. The more this hollow cylinder is moved onto the coil, the lower is the inductivity of the coil and therefore the frequency of the detection circuit lowers to a very inferior value. At such low frequencies the skin depth in the hollow cylinder is much greater than its wall thickness, so that the eddy currents are not able to confine the field of the coil to its interior. The reducing of the shielding effect of the hollow cylinder produces intolerable non-linearities.

It is therefore an object and feature of the present invention to provide a displacement measuring transducer of the above type, but which can be mounted internally within such a cylinder in a considerably more efficient and less costly manner.

It is a further object and feature of the invention to provide a transducer of the above type which can have a coil diameter on the order of 6 to 10 millimeters, but not require a bore in the piston/piston rod unit of greater than 12 millimeters and to eliminate the need to attach a core at the bottom of the bore.

A still further object of the invention is to provide a transducer which shows a linear behaviour over its whole range of movement.

The inventive apparatus for measuring the relative displacement of a piston/piston rod unit sealingly slidable within the cylinder of a pressurized cylinder actuator with end caps for sealing the ends of the cylinder, and with an elongated, current conducting coil, which is mounted to an end cap and extends into a hole in and parallel the axis of the piston/piston rod unit, comprises the following elements:
a) An electrically conducting, non-ferromagnetic wall around at least a portion of the coil and mounted to the piston/piston rod unit for axial displacement relative to the coil for varying the overlap of the coil by the wall and thereby vary the inductions of the coil at an applied frequency;
b) an AC electrical energy source connected to apply an AC signal to that coil, the frequency of the signal being at least high enough that the skin depth in that wall is less than the physical depth of that body; and
c) a detector circuit means connected to the coil for detecting a signal which is proportional to the coil inductance.

The present invention improves the basic concept of the above described transducer by providing an electrically conducting, nonferromagnetic wall around the exterior of at least a portion of the coil rather than a tube within the coil. Preferably the coil is mounted to an end cap of the cylinder and extends into a hole which is in and parallel to the axis of the pistion/piston rod unit within the cylinder. The externally mounted electrically conducting, nonferromagnetic wall around the coil is preferably a tube which lines the hole.

Fig. 1 is a schematic diagram of a prior art measuring apparatus in accordance with the above U.S. patent 4,667,158.

Fig. 2 is a simplified diagrammatic view of the present invention.

Fig. 3 is a diagrammatic view of an embodiment of the invention mounted within a fluid-pressure actuator.

Fig. 4 is a diagrammatic view of the preferred embodiment of the invention.

In describing the preferred embodiment of the invention which is illustrated in the drawings, specific terminology will be resorted to for the sake of clarity. However, it is not intended that the invention be limited to the specific terms so selected and it is to be understood that each specific term includes all technical equivalents which operate in a similar manner to accomplish a similar purpose. For example, the word connected or terms similar thereto are often used. They are not limited to direct connection but include connection through other circuit elements where such connection is recognized as being equivalent by those skilled in the art.

Fig. 2 illustrates a transducer embodying the present invention for use in an apparatus for measuring the relative displacement of two bodies. An elongated, current conducting coil 20 is wound upon a non-conducting coil form or bobbin 22. The coil 20 and its bobbin 22 are fixed to a first one of the two relatively moving bodies.

An electrically conducting, nonferromagnetic wall 24 is formed around at least a portion of the coil 20. Preferably, the wall 24 is a cylindrical tube, having a linear axis which is coaxial with the axis of the coil 20. The surrounding wall 24 is mounted to the second body so that it can reciprocate coaxially with it relative to the coil in order to vary the extent it overlaps the coil.

As with the embodiment of Fig. 1, an AC electrical energy source is connected to supply an AC signal to the coil 20. The frequency of that signal must be at least high enough so that the skin depth in the wall 24 is less than the physical depth of the wall. As a result, linear translation of the wall 24 will reduce the cross-sectional area of the flux path externally of the coil and therefore cause a substantially linear variation of the inductance of the coil 20 in a manner similar to the variations of the transducer in Fig. 1.

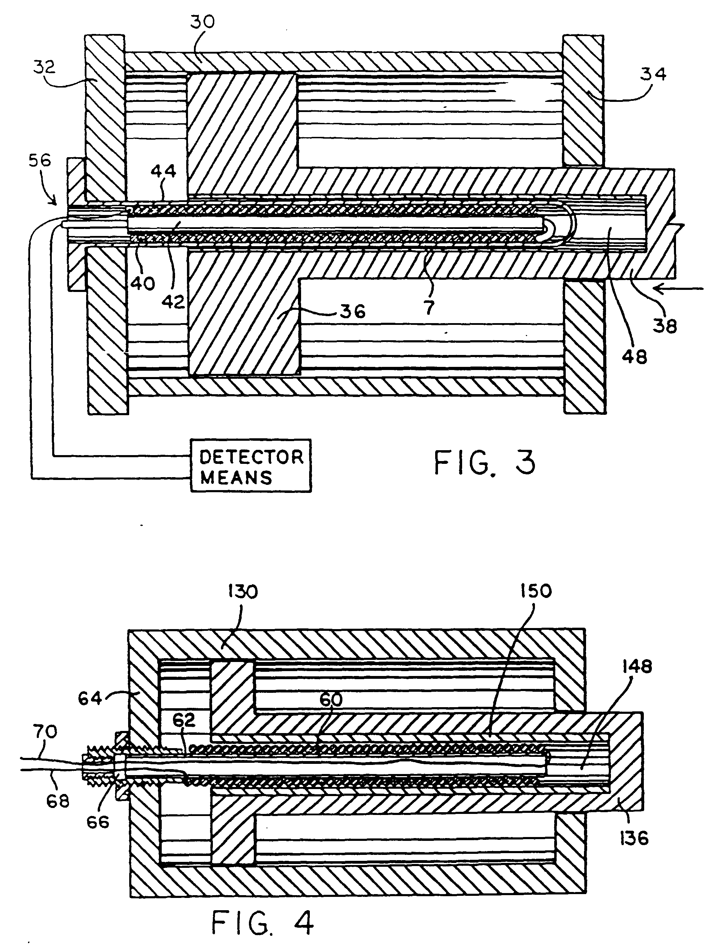

Fig. 3 illustrates a preferred embodiment of the present invention installed in a fluid actuator cylinder 30. The fluid actuator cylinder 30 has a pair of conventional end caps 32 and 34 and a piston/piston rod unit 36 which is sealingly slidable in the cylinder. The piston rod 38 is sealingly slidable through the end cap 34 for connection to a mechanical component to be driven by the actuator. The coil 40 is wound upon a bobbin 42.

A fluid impervious, nonferromagnetic protective jacket 44 may protectively surround the coil 40 and extend through the end cap 32 to open to the exterior of the cylinder. The coil, along with the bobbin upon which it is wound, may be mounted to the end cap 32 by sliding it axially within the impervious jacket 44. This permits the electrical conductors which connect the coil 40 to the AC electrical energy source and detector circuit 54 to extend through the jacket opening 56.

Referring to Fig. 4, alternatively and preferably the coil 60 is simply formed on a bobbin 62 by insulated magnetic wire which protects the coil from the fluid and its environment. The bobbin is mounted directly to the end cap 64 and a conventional high pressure, wire feed through 66 is used for feeding the wires 68 and 70 through to the external circuitry. In this manner the protective jacket 44 of Fig. 3 may be eliminated so that the bore in the piston/piston rod can be less.

Referring to Figs. 3 and 4 simultaneously, a hole 48 or 148 is bored into the end of the piston/piston rod unit 36 or 136 so that the protective jacket 34 if used and the coil 40 or 60 may extend into the hole 48 or 148 parallel to the axis of the piston/piston rod unit 36 or 136. An electrically conducting, nonferromagnetic, tubular wall, formed for example as a copper or aluminum sleeve 50 or 150, lines the hole 48 or 148 and serves to reduce the flux linkages by increasing the reluctance of the flux path exteriorly of the coil in the region adjacent the sleeve 50 or 150. In this manner the inductance is varied in proportion to piston/piston rod unit displacement.

It is desirable to shield the transducer and to provide a low reluctance flux path for the coil 40 or 60 in the absence of the tubular wall 50 or 150 which is varied solely by translation of the tubular wall 50 or 150 with respect to the coil 40 or 60. This is conveniently accomplished in the embodiment of Fig. 3 by the cylinder 30 or 130 which surrounds the piston/piston rod unit and is typically and conventionally constructed of a ferromagnetic material and the air gap between coil and cylinder. Thus, the cylinder itself cooperates with the transducer to shield the coil in the manner of the shield 4 and ferrite 5 of Fig. 1.

While certain preferred embodiments of the present invention have been disclosed in detail, it is to be understood that various modifications may be adopted without departing from the scope of the following claims.

## Claims

1. Apparatus for measuring the relative displacement of a piston/piston rod unit (36; 136) sealingly slidable within the cylinder of a pressurized cylinder actuator (30; 130) with end caps (32, 34; 64) for sealing the ends of the cylinder, and with an elongated, current conducting coil (40; 60), which is mounted to an end cap (32; 64) and extends into a hole (48; 148) in and parallel to the axis of the piston/piston rod unit (36; 136), characterised by:
a) an electrically conducting, non-ferromagnetic wall (24; 150) around at least a portion of the coil (40; 60) and mounted to the piston/piston rod unit (36; 136) for axial displacement relative to the coil (40; 60) for varying the overlap of the coil (40; 60) by the wall (24; 150) and thereby varying the inductance of the coil (40; 60) at an applied frequency;
b) an AC electrical energy source (6) connected to apply an AC signal to said coil (40; 60), the frequency of the signal being at least high enough that the skin depth in said wall (24; 150) is less than the physical depth of said body; and
c) a detector circuit means (7) connected to the coil (40; 60) for detecting a signal which is proportional to the coil inductance.

2. Apparatus in accordance with claim 1, characterised in that the electrically conducting, non-ferromagnetic wall (24) is a sleeve (150) lining the hole (48; 148) in the piston/piston rod unit (36; 136).

3. Apparatus in accordance with claim 1 or 2, characterised in that the coil (40; 60) is helical with a linear axis and the electrically conducting, non-ferromagnetic wall (24) is a tube surrounding the coil (20).

4. Apparatus in accordance with any one of the preceding claims, characterised in that a ferromagnetic shield surrounds the reciprocatable, electrically conducting, non-ferromagnetic wall (24; 150) and the coil (40; 60) to provide a low reluctance flux path.

5. Apparatus in accordance with claim 4, characterised in that the shield around the coil (40; 60) is formed by the hydraulic cylinder (130), which is therefore made of ferromagnetic material, and provides a low reluctance flux path for the coil (40; 60).

6. Apparatus in accordance with any one of the preceding claims, characterised in that a fluid impervious, non-ferromagnetic jacket (44) surrounds the coil (40; 60) and is interposed between the coil (40; 60) and the electrically conducting, non-ferromagnetic wall (24; 150) for protecting the coil from the environment of the wall.

7. Apparatus in accordance with claim 6, characterised in that the fluid impervious, non-ferromagnetic jacket (44), which surrounds the coil (40; 60) within the cylinder (30; 130) and is interposed between the coil (40; 60) and the electrically conducting, non-ferromagnetic wall (24; 150), extends through said end cap (32; 64) to open to the exterior of the cylinder (30; 130), and in that the electrical connections (68, 70) to the coil (40; 60) are made through the opening (56; 66) of the jacket (44).

## Patentansprüche

1. Vorrichtung zur Messung der relativen Verschiebung eines Kolbens oder einer Kolbenstangeneinheit (36; 136), welche(r) abdichtend sowie gleitfähig innerhalb des Zylinders eines druckbeaufschlagten Zylinderaktuators (30; 130) gelagert ist, der mit Endkappen (32, 34; 60) zum Abdichten der Zylinderenden versehen ist sowie eine längliche, stromleitende Spule (40; 60) aufweist, welche an einer Endkappe (32; 64) befestigt ist und sich in eine konzentrisch zur Achse des Kolbens bzw. der Kolbenstangeneinheit (36; 136) verlaufende Ausnehmung (48; 148) erstreckt, gekennzeichnet durch die folgenden Elemente:
a) eine wenigstens einen Teil der Spule (40, 60) umgebende, elektrisch leitende, nicht ferromagnetische Wandung (24; 150), die an dem Kolben bzw. der Kolbenstangeneinheit (36; 136) befestigt ist, so daß sie gegenüber der Spule (40; 60) in axialer Richtung verschiebbar ist, um den überlappenden Bereich zwischen der Spule (40; 60) und der Wandung (24; 150) zu verändern, wobei sich die Induktivität der Spule (40; 60) bei der angelegten Frequenz verändert;
b) eine elektrische Wechselstrom-Energiequelle (6), die mit der Spule (40; 60) verbunden ist, um an diese ein Wechselstromsignal anzulegen, dessen Frequenz mindestens hoch genug ist, damit die Skintiefe in der Wandung (24, 150) weniger als die physikalische Tiefe in dem besagten Körper ist; sowie
c) einen Detektorschaltkreis (7), der mit der Spule (40; 60) verbunden ist, um ein Signal nachzuweisen, welches proportional zur Spuleninduktivität ist.

2. Vorrichtung nach Anspruch 1, dadurch gekennzeichnet, daß die elektrisch leitende, nicht ferromagnetische Wandung (24) aus einer Muffe (150) gebildet ist, welche die Öffnung (48; 148) des Kolbens bzw. der Kolbenstangeneinheit (36; 136) auskleidet.

3. Vorrichtung nach Anspruch 1 oder 2, dadurch gekennzeichnet, daß die Spule (40; 60) schraubenförmig ist mit einer linearen Achse, und daß die elektrisch leitende, nicht ferromagnetische Wandung (24) als Röhre ausgebildet ist, welche die Spule (20) umgibt.

4. Vorrichtung nach einem der vorhergehenden Ansprüche, dadurch gekennzeichnet, daß eine ferromagnetische Abschirmung die alternierend längsverschiebbare, elektrisch leitende, nicht ferromagnetische Wandung (24; 150) und die Spule (40; 60) umgibt, um einen Flußpfad mit einem niedrigen magnetischen Widerstand zu schaffen.

5. Vorrichtung nach Anspruch 4, dadurch gekennzeichnet, daß die um die Spule (40; 60) herumgelegte Abschirmung durch den hydraulischen Zylinder (130) gebildet ist, der zu diesem Zweck aus ferromagnetischen Material gefertigt ist und für die Spule (40; 60) einen Flußpfad mit einem niedrigen magnetischen Widerstand darstellt.

6. Vorrichtung nach einem der vorhergehenden Ansprüche, dadurch gekennzeichnet, daß eine für Flüssigkeit undurchdringliche, nicht ferromagnetische Ummantelung (44) die Spule (40; 60) umgibt und zwischen der Spule (40; 60) und der elektrisch leitenden, nicht ferromagnetischen Wandung (24; 150) angeordnet ist, um die Spule gegenüber der Umgebung der Wandung zu schützen.

7. Vorrichtung nach Anspruch 6, dadurch gekennzeichnet, daß die für Flüssigkeit undurchdringliche, nicht ferromagnetische Ummantelung (44), welche die Spule (40; 60) umgibt und zwischen der Spule (40; 60) und der elektrisch leitenden, nicht ferromagnetischen Wandung (24; 150) angeordnet ist, sich durch die Endkappe (32; 64) erstreckt, um sich zu dem Außenraum des Zylinders (30; 130) zu öffnen; sowie dadurch, daß die elektrischen Verbindungen (68, 70) zu der Spule (40; 60) durch die Öffnung (56; 66) der Ummantelung (44) hergestellt sind.

## Revendications

1. Dispositif pour mesurer le déplacement relatif d'une unité à piston/tige de piston (36;136) pouvant glisser d'une manière étanche à l'intérieur du cylindre d'un actionneur à cylindre sous pression (30;130) comportant des capots d'extrémité (32,34;64) pour fermer de façon étanche les extrémités du cylindre, et une bobine allongée de conduction de courant (40;60), qui est montée sur un capot d'extrémité (32;64) et pénètre dans un trou (48;148) aménagé dans l'unité à piston/tige de piston (36;136) et parallèlement à l'axe de cette unité, caractérisé par :
a) une paroi électriquement conductrice, non ferromagnétique (24;150) disposée autour d'au moins une partie de la bobine (40;60) et montée sur l'unité à piston/tige de piston (36;136) pour son déplacement axial par rapport à la bobine (40;60) de manière à modifier le chevauchement de la bobine (40;60) par la paroi (24;150) et modifier de ce fait l'inductance de la bobine (40;60) à une fréquence appliquée;
b) une source d'énergie électrique à courant alternatif (6) connectée de manière à appliquer un signal à courant alternatif à ladite bobine (40;60), la fréquence du signal étant au moins suffisamment élevée pour que la profondeur de peau dans ladite paroi (24; 150) soit inférieure à la profondeur physique dudit corps; et
c) des moyens formant circuit de détection (7) connectés à la bobine (40;60) pour détecter un signal qui est proportionnel à l'inductance de la bobine.

2. Dispositif selon la revendication 1, caractérisé en ce que la paroi électriquement conductrice, non ferromagnétique (24) est un manchon (150) garnissant le trou (48;148) situé dans l'unité à piston/tige de piston (36;136).

3. Dispositif selon la revendication 1 ou 2, caractérisé en ce que la bobine (40;60) est hélicoïdale, avec un axe rectiligne et que la paroi électriquement conductrice, non ferromagnétique (24) est un tube entourant la bobine (20).

4. Dispositif selon l'une quelconque des revendications précédentes, caractérisé en ce qu'un blindage ferromagnétique entoure la paroi électriquement conductrice, non ferromagnétique (24;150), qui est déplaçable en va-et-vient, et la bobine (40;60) pour former un trajet de flux de faible reluctance.

5. Dispositif selon la revendication 4, caractérisé en ce que le blindage autour de la bobine (40;60) est formé par le cylindre hydraulique (130), qui est par conséquent réalisé en un matériau ferromagnétique et fournit un trajet de flux de faible reluctance pour la bobine (40;60).

6. Dispositif selon l'une quelconque des revendications précédentes, caractérisé en ce qu'une chemise imperméable aux fluides et non ferromagnétique (44) entoure la bobine (40;60) et est intercalée entre la bobine (40;60) et la paroi électriquement conductrice, non ferromagnétique (24;150) pour protéger la bobine vis-à-vis de l'environnement de la paroi.

7. Dispositif selon la revendication 6, caractérisé en ce que la chemise imperméable aux fluides, non ferromagnétique (44), qui entoure la bobine (40;60) à l'intérieur du cylindre (30;130) et est intercalée entre la bobine (40;60) et la paroi électriquement conductrice, non ferromagnétique (24;150), s'étend à travers ledit capot d'extrémité (32;64) pour s'ouvrir à l'extérieur du cylindre (30;130), et en ce que les connexions électriques (68,70) avec la bobine (40;60) sont formées à travers l'ouverture (56;66) de la chemise (44).
